(19) Europäisches Patentamt

European Patent Office

Office européen des brevets

(11) **EP 1 562 304 A1**

(12) **EUROPÄISCHE PATENTANMELDUNG**

(43) Veröffentlichungstag:
**10.08.2005 Patentblatt 2005/32**

(51) Int Cl.⁷: **H04B 5/02**

(21) Anmeldenummer: **04002614.8**

(22) Anmeldetag: **06.02.2004**

(84) Benannte Vertragsstaaten:
**AT BE BG CH CY CZ DE DK EE ES FI FR GB GR
HU IE IT LI LU MC NL PT RO SE SI SK TR**
Benannte Erstreckungsstaaten:
**AL LT LV MK**

(71) Anmelder: **Siemens Schweiz AG**
**8047 Zürich (CH)**

(72) Erfinder: **Schmid, Rolf**
**8800 Thawil (CH)**

(74) Vertreter: **Kley, Hansjörg**
**c/o Siemens AG**
**Patentabteilung**
**Postfach 22 16 34**
**80506 München (DE)**

(54) **Verfahren zur Datenübertragung mittels Feldpolarisation bei Nahfeldübertragung**

(57)    Die bekannten Datenübertragungsverfahren beruhen darauf, dass einem Trägersignal ($I_T$) die zu übertragenden Daten aufmoduliert werden und nach erfolgter Übertragung über die Luftstrecke beim Empfänger demoduliert werden. Die bei der Demodulierung erzielbare Auflösung ist sehr stark abhängig von Pegel und Frequenz der Störfelder. Damit der Störabstand entscheidend verbessert und vom Auflösungsvermögen einer Frequenz- oder Amplituden-Demodulation unabhängig zu machen, wird ein Verfahren zur Datenübertragung zwischen einem Fahrzeug (3) und einem festen Streckenpunkt (6) mittels eines elektromagnetischen Feldes vorgeschlagen, bei dem die zu übertragenden Daten als digitaler Bitstrom («0010110.. ») vorliegen und der Bitstrom («0010110.. ») durch eine Modulation der Polarisation (4, $L_1$, $L_2$; $5_1$, $5_2$) des elektromagnetischen Feldes übertragen wird. Dadurch wird einen erheblich grösserer Störabstand und damit eine höhere Störfestigkeit erreicht. Dieses Verfahren ist für die Eisenbahnsicherungstechnik vorgesehen.

**FIG 5**

EP 1 562 304 A1

**Beschreibung**

Die Erfindung bezieht sich auf ein Verfahren zur Datenübertragung mittels Feldpolarisation gemäss dem Oberbegriff des Patentanspruchs 1.

Die vorliegende Erfindung betrifft das Gebiet der drahtlosen Datenübertragung für das Anwendungsgebiet Zugbeeinflussung, Zugerkennung und Zugortung. Um eine sicherheitsrelevante Datenübertragung von schienengebundenen Fahrzeugen zu einem festen Streckenpunkt zu garantieren, d.h. für eine Sicherheitsbetrachtung und einen Sicherheitsnachweis, ist es zwingend erforderlich, die Bitfehlerrate und Datenlink-Performance aufgrund der am Übertragungsort auftretenden elektromagnetischen Störfelder zu kennen und zu quantifizieren. Diese Störfelder resultieren insbesondere aus:

a) Traktionsströmen in Fahrdraht, Schiene und Fahrzeug;
b) Ströme aus den eingesetzten Wirbelstrombremsen.
c) Elektromagnetische Komponenten im Fahrzeug, wie z.B. alle Arten von Motoren und Umrichtern für die Hilfsbetriebe.
d) Resonanzeffekte von metallischen Teilen wie Schwellen und elektrischen Verbindungen

Dabei werden diese Störfelder durch das im Gleisbereich massiv vorhandene ferro-magnetische Material verändert, insbesondere durch Reflexion, Phasenverschiebungen und durch lokal induzierte Primär- und Sekundärströme.

Die bekannten Datenübertragungsverfahren beruhen darauf, dass einem Trägersignal die zu übertragenden Daten aufmoduliert werden und nach erfolgter Übertragung über die Luftstrecke beim Empfänger demoduliert werden. Die bei der Demodulierung erzielbare Auflösung ist sehr stark abhängig von Pegel und Frequenz der lokalen diskontinuierlichen und kontinuierlichen Störfelder. Da durch die Zugbeeinflussungssysteme sicherheitsrelevante Daten für den Eisenbahnverkehr wie z.B. eine zulässige Höchstgeschwindigkeit oder ein «HALT» zeigendes Signal übermittelt werden, ist eine verbindliche Aussage über den Wahrheitsgehalt der empfangenen und demodulierten Daten erforderlich. Werden durch die diskontinuierlichen und kontinuierlichen Störfelder die Bitfehlerrate des Datenübertragungskanals zu gross, wird die Erkennung der Signalstellung aufgrund der Demodulation des Empfängers unmöglich. Dadurch verringert sich die Verfügbarkeit bzw. die Sicherheit des Zugsicherungssystems.

Einrichtungen zur Datenübertragung zwischen einem schienengebundenen Fahrzeug und auf einem festen Streckenpunkt sind standardisiert und z.B. in [1] spezifiziert. Gemäss [1] ist ein aufwendiges Verfahren für die Nachbearbeitung erforderlich, um Integrität, Authentizität und Interoperabilität der empfangenen Daten sicherzustellen.

Der vorliegenden Erfindung liegt daher die Aufgabe zugrunde, ein Verfahren zur Datenübertragung zwischen einem schienengebundenen Fahrzeug und einem festen Streckenpunkt anzugeben, dass weitgehend immun gegen die im Gleisbereich und/oder Fahrzeugbereich auftretenden diskontinuierlichen und kontinuierlichen Störfelder ist.

Diese Aufgabe wird das im Patentanspruch 1 angegebene Verfahren gelöst.

Durch die erfindungsgemässe Lösung, wonach
der Bitstrom durch eine Modulation der Polarisation des elektromagnetischen Feldes übertragen wird;
ist der Störleistungsabstand nicht mehr vom Auflösungsvermögen einer Frequenz- oder Amplituden-Demodulation abhängig. Der Störleistungsabstand wird durch das Auflösungsvermögen der Feldpolarisation von zwei Ebenen (vertikal und horizontal) bestimmt, welches eine erheblich höhere Störfestigkeit bietet, da der skalare Pegel des abgestrahlten Feldes gegenüber den Pegeln der Störfelder unabhängig auf zwei Polarisationsebenen von den zu übertragenden Daten ist.

Erfindungsgemäss werden die als Bitstrom zu übertragenden Daten nicht mehr auf ein Trägersignal aufmoduliert sondern in einem hier zweidimensional über zwei Polarisationsrichtungen (Ebenen) übertragen.

Für eine zuverlässige, sichere und eine hohe Verfügbarkeit aufweisende Datenübertragung zu erreichen, bietet dieses Verfahren eine optimierte Lösung für alle Umgebungsrote, welche grosse Störpegel «von Natur aus» aufweisen.

Das erfindungsgemässe Verfahren zur Datenübertragung erlaubt, wegen der Kenntnis des Betrages des abgestrahlten Feldes dieses an seinem Empfangsort - sei es am Fahrzeug oder im Gleisbereich - zu messen. Der so gemessene Wert kann nun seinerseits benutzt werden, um ein gemäss dem vorliegenden Verfahren ein polarisiertes Feld mit einem Vielfachen des gemessenen Pegels eine Störfestigkeitsprüfung durchzuführen. Die Bitfehlerrate des Datenübertragungskanals kann somit unabhängig von der Präsenz des Nutzsignals erkannt bzw. ermittelt werden. Dies ist besonders vorteilhaft, da die heutigen einschlägigen Normen wie EN 50159, EN 50121-2 und EN 50121-4 zum Nachweis der Normkonformität bez. Emission ein Verfahren vorschreiben, dass in 10m Abstand von der Gleismitte die betreffende Messung vornimmt. Aus der Normkonformität bezüglich Emission eines Fahrzeuges im Abstand von 10m ergibt sich jedoch keine Aussage über auftretende Feldstärken im unmittelbaren Gleisbereich; das heisst in einem Abstand von etwa 0.5m bis etwa 1.2m. Für den Sicherheitsnachweis von eisenbahntechnischen Komponenten bezüglich Immunität kann so keine Aussage gemacht werden. Hier erlaubt nun in einer Weiterentwicklung des erfindungsgemässen Verfahrens eine Störfestigkeitsprüfung von eisenbahntechnischen Komponenten, die die tatsächlichen Werte beinhaltet; vorzugsweise wird dazu der gemessene Skalar mit einem Faktor m von folgendem Wertebereich versehen:

$$1.5 < m < 20.$$

Der resultierende Wert dient dabei als Pegel für die Immunitätsprüfung gemäss dem erfindungsgemässen Übertragungsverfahren.

Vorteilhafte Ausgestaltungen der Erfindung sind in weiteren Ansprüchen angegeben.

Die Erfindung wird nachfolgend anhand einer Zeichnung beispielsweise näher erläutert. Dabei zeigen:

Figur 1    Lage der Antennen am Fahrzeug und im Gleisbereich;

Figur 2    perspektivische Darstellung der Lage von Rahmenantennen im Gleisbereich;

Figur 3    Darstellung der Aufteilung der Ströme in den Antennen am Fahrzeug und auf dem Gleisbereich;

Figur 4.1   Dimensionierung einer Antenne im Gleisbereich;

Figur 4.2   Ausgestaltung einer Antenne im Gleisbereich mittels Koaxialkabel;

Figur 5    Schaltungstechnische Prinzipdarstellung der Komponenten zur Durchführung des erfindungsgemässen Verfahrens;

Figur 6    Qualitative Darstellung eines Emissionsgrenzwertes gemäss der Norm EN 50121-2.

Zunächst wird der Begriff «Modulation der Polarisation des elektromagnetischen Feldes» soweit erläutert, damit die Funktion der in den Zeichnungen angegebenen Antennen verständlich wird. Elektromagnetische Wellen (Felder) sind im Kontext der vorliegenden Erfindung transversale Wellen, dessen elektrischer und magnetischer Feldvektor senkrecht zur Ausbreitungsrichtung stehen. Dabei ist das E-Feld quer zur Ausbreitung des H-Feldes, die Ebene quer zur vorgenannten Ausbreitung heisst Polarisationsebene. Vorliegend wird die lineare Polarisation betrachtet: Die Richtung des E-Feldes ist konstant, die Amplitude oszilliert zeitlich. In der Polarisationsebene gibt es nun zwei zueinander orthogonale Richtungen, die als horizontal und als vertikal polarisiert bezeichnet werden. Für den Kontext der vorliegenden Erfindung ist es jedoch nicht erforderlich; dass die beiden Ebenen zueinander orthogonal stehen; die Ebenen können geneigt sein um einen Winkelbereich von ca.

$$45° < \alpha < 135°.$$

Dadurch ist eine Selektivität s der Pegel in den beiden Polarisationsrichtungen sichergestellt im Bereich

$$0.7 < s < 1.$$

Der Näherungswert 0.7 ergibt sich aus sin(45°) bzw. aus sin(135°) aus $\sqrt{2}$ /2.

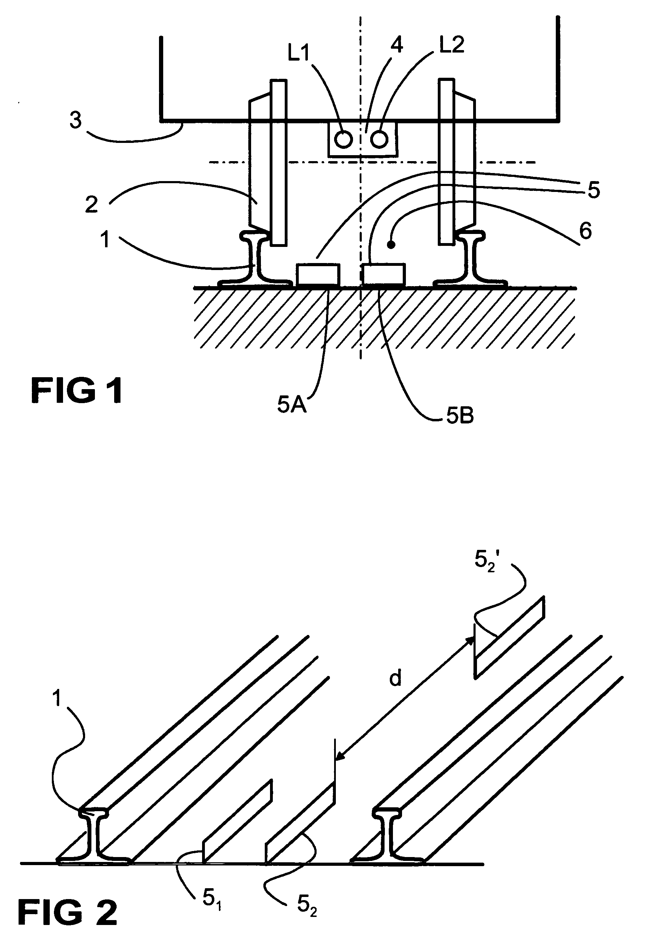

Figur 1 zeigt die Lage der Doppelantennen 4 bzw. 5 an einem Fahrzeug 3 und im Gleisbereich 6. Unter dem Begriff Doppelantenne ist eine Antenne zu verstehen, die selektiv auf die vorstehend genannten zwei Polarisationsrichtungen «vertikal» und «horizontal» ausgebildet ist. Die Angabe «vertikal» bzw. «horizontal» impliziert die vorstehend genannte relative Lage $\alpha$ = 90° der beiden Polarisationsebenen. Wie jedoch bereits ausgeführt, sind die Polarisationsebenen vorzugsweise im obgenannten Bereich geneigt. Die Doppelantenne 4 weist zwei Leiter L1 und L2 auf, durch die ein polarisiertes elektromagnetisches Feld abgestrahlt wird.

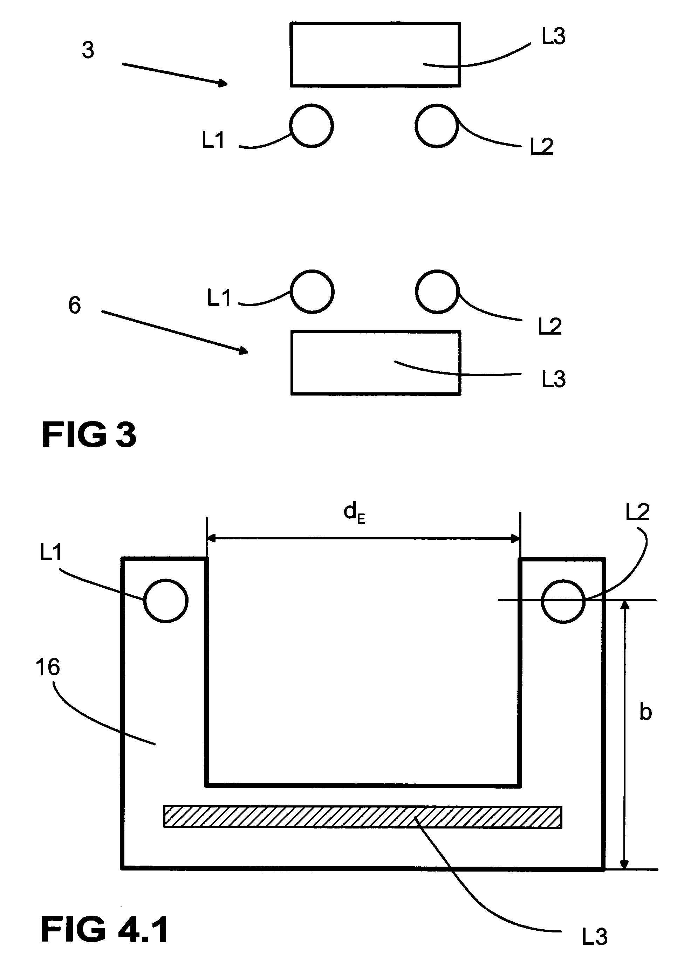

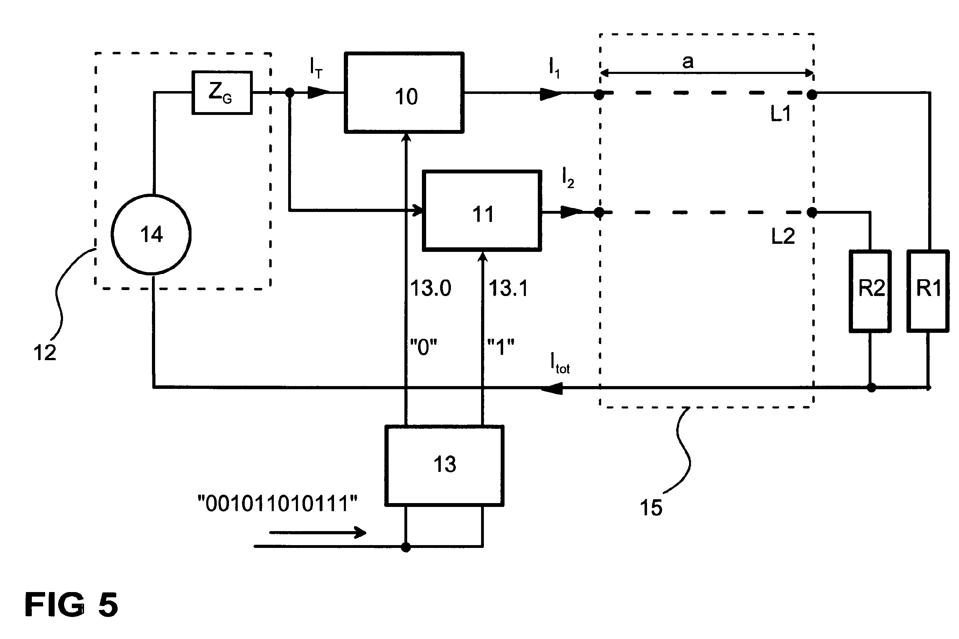

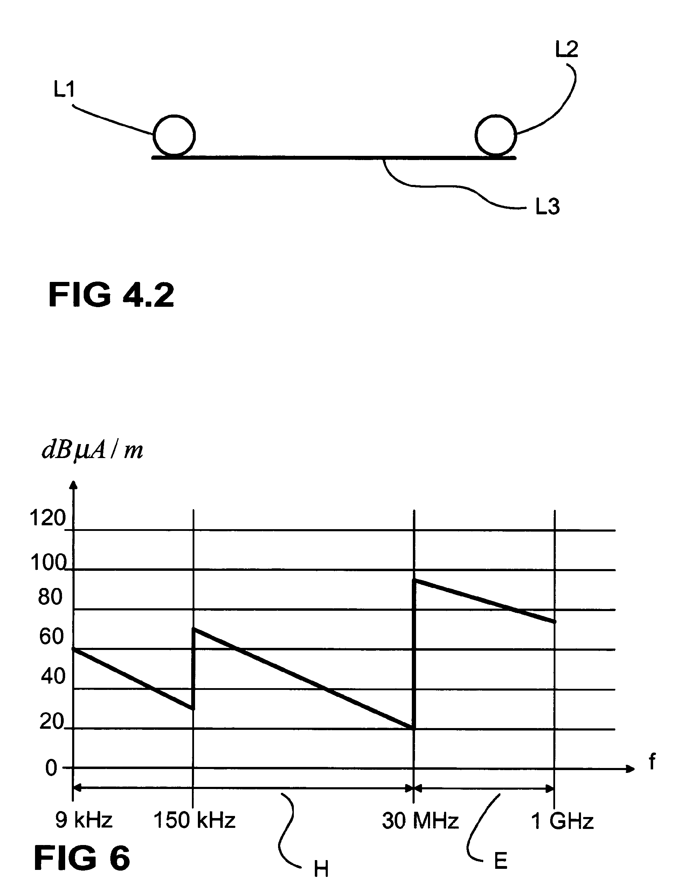

Zur Erläuterung der Ausgestaltung der Doppelantennen wird nun auf die Figuren 3, 4.1 und 4.2 Bezug genommen. Die Figur 3 ist selber eine schematische Seitenansicht der im Schaltbild gemäss der Figur 5 dargestellten Antennenanordnung mit den Bezugszeichen L1 und L2. Zwei mögliche konstruktive Ausgestaltungen zeigen die Figuren 4.1 und 4.2.

Die Leiter L1 und L2 sind zwei unabhängige elektrisch leitende Metallteile. In einer praktischen Ausgestaltung sind diese Leiter L1 und L2 vorzugsweise als Stab oder als ähnliche Profile ausgebildet. Der Leiter L3 wirkt als gemeinsamer Rückleiter oder als Ground-Fläche. Der Leiter L3 kann wie die Leiter L1 und L2 auch als Profil ausgeführt sein werden, da nur die gute elektrische Leitfähigkeit der Leiter L1, L2 und L3 für die Aufgabe bzw. Funktion entscheidend sind. Die Distanz dE bestimmt die Güte (geometrischer Abstand L1/L2 zur Empfängerantenne) der Feldpolarisation von der horizontalen bzw. vertikalen Ebene der Ströme in den Leitern L1 und L2 mit Rückstrom im (flächigen) Leiter L3. In der Figur 4.1 wird beispielhaft eine Realisation mit einem U-Profil gezeigt. Abgesehen von den Leitern L1, L2 und L3 wirkt das U-Profil als Isolation und Träger 16 zur Distanzierung von L1, L2 und L3.

Die Figur 4.2 zeigt die einfachste realisierbare Lösung mit kleinem Abstand L1, L2 gegen den Rückleiter L3. Bei speziellen metallischem Untergrund kann auf den flächigen Leiter L3 sogar verzichtet werden, wenn die elektrische Leitfähigkeit des Untergrundes genügend homogen ist.

Alternativ zur Darstellung gemäss den Figuren 2, 4.1 und 4.2 können im Gleisbereich 6 Doppelantennen gemäss der Figur 3 so ausgestaltet sein, dass in einem Abstand von ca. 5 bis 20 cm zwei Rahmenantennen parallel zu den Schienen angeordnet sind. Dieser Abstand ist in den Fig. 1 und 2 ersichtlich, aber nicht mit einer Variablen bezeichnet. Diese können relativ zur Gleisachse symmetrisch oder asymmetrisch angeordnet sein. Darüber hinaus können längs des Geleises weitere Doppelantennen $5_2$' in einem Abstand d angeordnet sein. Der Abstand d ist vorzugsweise in einem Bereich von 10m .. 800m. Dadurch können trotz der punktförmigen Übermittlung von Information quasikontinuierlich weitere Informationen übertragen werden, z.B. vor einem Signal. Dadurch kann ein Wechsel des Signalbegriffs schneller auf das Schienenfahrzeug übertragen werden.

Eine Schaltungsanordnung zur Implementierung des erfindungsgemässen Verfahrens zeigt Figur 5. Ein zu übertragender Bitstrom «001011010111» wird einer Bit 0 / Bit 1 Trennschaltung 13 zugeführt, die im folgenden kurz als Separierer 13 bezeichnet wird. Auf den Leitungen 13.0 und 13.1 wird nun in Echtzeit je einem Phasenschieber 10 und 11 die Information zugeführt, ob zum jeweiligen Zeitpunkt ein Bit 0 bzw. Bit 1 zu übertragen ist. Das Trägersignal $I_T$ für die beiden Phasenschieber 10 bzw. 11 wird in einer Quelle 12 erzeugt, die in einer Schemadarstellung einen Generator 14 und eine Quellimpedanz $Z_G$ enthält. Den Phasenschiebern 10 und 11 ist je eine Phasenverschiebung $\varphi_1$ und $\varphi_2$ zugeordnet. Dabei sind nicht nur $\varphi_1 \neq \varphi_2$ , sondern die resultierende Polarisation sollte bezüglich des Winkels $\alpha$ den vorstehend erwähnten Bereich $45° < \alpha < 135°$ ergeben. Den als Antennen fungierenden Leitern L1 und L2 wird je ein Strom $I_1$ bzw. $I_2$ zugeführt:

$$I_1 := I_1(\varphi_1) \text{ und } I_2 := I_2(\varphi_2) .$$

Über je einen Abschlusswiderstand R1 und R2 bilden diese Leiter L1 / L2 eine Abstrahleinrichtung 15.

Das vom Generator 14 abgegebene Trägersignal, d.h. ein Strom, kann sinusförmig oder auch gespreizt, das heisst DSSS-förmig sein. DSSS steht dabei für Direct Sequence Spread Spectrum. Für das Trägersignal sind folgende Frequenzen bevorzugt:

a) bei Sinusform

$f_T$ = 13.5 MHz, 27.5 MHz oder

$f_T$ = 434 MHz, 868 MHz.

Bei den im Gleisbereich vorhandenen Abmessung erfolgt die Übertragung im Nahfeld, d.h. das H-Feld ist dominant; beim zweiten Bereich aus dem ISM-Band gemäss EN 55011 erfolgt die Übertragung im Fernfeld, d.h. das E-Feld ist dominant.

Nachfolgend ist die Wirkung der Polarisation anhand von angenommenen Strömen für eine symmetrische Anordnung eines Messpunktes P zwischen den beiden Leitern L1 und L2 gemäss der Tabelle 1 gezeigt; dabei wird eine Frequenz unterhalb von 30 MHz angenommen.

```
Tabelle 1
```

Für insgesamt drei Wertepaare des Stromes in den Leitern L1 und L2 ist die gesamte (skalare) Feldstärke H sowie die Feldstärke gemäss einer Modellrechnung in den beiden Polarisationsrichtungen «vertikal» und «horizontal» gezeigt.

Tabelle 2

|  | x | y | Strom [A] | H[A/m] | H_ver [A/m] | H_horiz [A/m] |
|---|---|---|---|---|---|---|
| L1 | 0,75 | 0,015 | 0,011 | 3,717E-03 | 2,959E-03 | -2,249E-03 |
| L2 | 0 | 0,015 | 0,011 | 3,717E-03 | -2,959E-03 | -2,249E-03 |
| P |  |  |  | 7,434 E-03 | 0 | -4,498 E-03 |
| L1 | 0,75 | 0,015 | 0,011 | 3,7176E-03 | 2,959E-03 | -2,249E-03 |
| L2 | 0 | 0,015 | -0,011 | -3,7176E-03 | 2,959E-03 | 2,249E-03 |
| P |  |  |  | 0 | 5,919 E-03 | 0 |
| L1 | 0,75 | 0,015 | 0,011 | 3,717E-03 | 2,959E-03 | -2,249E-03 |
| L2 | 0 | 0,015 | -0,005 | -1,689E-03 | 1,345E-03 | 1,022E-03 |
|  |  |  |  | 2,028E-03 | 4,305E-03 | -1,227E-03 |

b) DSSS-Träger

Für eine Übertragung im Nahbereich ist der Frequenzbereich vorzugsweise so zu wählen, dass nach erfolgter Spreizung die auftretenden Frequenzen höchstens eine Grössenordnung von f = 30 MHz erreichen; dies entspricht einer Mittenfrequenz von f = 15 MHz .

Fig. 6 zeigt qualitativ den gemäss der Norm EN 50121-2 höchstzulässigen Grenzwert der Störaussendung in einer Bahnumgebung, bei der die Fahrdrahtspannung wahlweise 15 kV AC oder 3 kV DC oder 1.5 kV DC beträgt. Wie bereits ausgeführt, ist dieser Grenzwert in 10m Distanz von der Gleismitte von einem Fahrzeug einzuhalten. Bei 10m Messentfernung bedeutet dies, dass die Messung unterhalb von 5 MHz im Nahfeldbereich stattfindet, das heisst hier dominiert das magnetische H-Feld. Das erfindungsgemässe Verfahren erlaubt nun, auch ein magnetisches Störfeld in unmittelbarer Nähe der Quelle, d.h. im Gleisbereich zu messen. Ein auf diese Weise gemessene Feldstärke kann nun benutzt werden, um durch eine Immunitätsprüfung mit einem Mehrfachen m der gemessenen Feldstärke durchzuführen. Vorzugsweise werden für den vorgenannten Faktor m die Werte 1.5, 2, 3, .. 20 vorgesehen.

Die Erfindung ist nicht auf die vorstehend beschriebene Ausführungsform beschränkt. Weitere Ausführungsformen können beispielsweise beinhalten:

- Variable Zuordnung der Phasenwinkel $\varphi_1$, $\varphi_2$;
- andere Formen des Trägersignals, z.B. eine Pulsung, dabei sind in einer Spektrumsbetrachtung die Formen so anzupassen, dass die Übertragung innerhalb der zugelassenen Frequenzbereich erfolgt; "frei" unterhalb 30 MHz, oberhalb in den ISM-Bändern.

**Liste der verwendeten Bezugszeichen**

1        Schiene

2        Rad

3        Fahrzeug; Fahrzeugbereich; Fahrzeugkasten

4        Doppelantenne am Fahrzeug, Fahrzeugantenne

5        Doppelantenne im Gleisbereich, ortsfeste Antenne

5A, 5B        verschiedene mögliche Lagen der ortsfesten Doppelantenne im Gleisbereich 6

$5_1$, $5_2$        Rahmenantennen im Gleisbereich 6

6        Gleisbereich

| 7 | Abstrahleinrichtung |
|---|---|
| 10 | Phasenschieber für Bit 0 |
| 11 | Phasenschieber für Bit 1 |
| 12 | Quelle für Trägersignal |
| 13 | Bit 0 / Bit 1 Trennschaltung; Separierer |
| 13.0 | Leitung zur Übertragung der Information Bit 0 |
| 13.1 | Leitung zur Übertragung der Information Bit 1 |
| 14 | Generator |
| 15 | Abstrahleinrichtung |
| 16 | Träger- und/oder Isolationsmaterial |
| $\alpha$ | relative Lage zweier Polarisationsebenen |
| a | Abstrahllänge der Leiter L1, L2 |
| b | Abstand der Leiter L1, L2 gegenüber Ground (Fahrzeug oder Gleisbereich) |
| A | stark asymmetrische Lage einer Rahmenantenne im Gleisbereich |
| B | schwach asymmetrische Lage einer Rahmenantenne im Gleisbereich |
| d | Abstand zweier hintereinander im Gleisbereich 6 angeordneter Rahmenantennen |
| $d_E$ | Abstand zweier Leiter L1 und L2 |
| f | Frequenz |
| $f_T$ | Trägerfrequenz |
| $\varphi_1, \varphi_2$ | den Phasenschiebern 10, 11 zugeordnete Phasenwinkel |
| $\lambda$ | Wellenlänge einer Frequenz f korrespondierend |
| $I_1, I_2, I_{tot}$ | Ströme in Funktion der Zeit |
| L1, L2 | Leiter |
| L3 | flächiger Leiter, leitende Fläche |

**Liste der verwendeten Abkürzungen**

DSSS    Direct Sequence Spread Spectrum Technik

ISM-Band Von der Regulierung zugelassenes Frequenzband für «Industrial, Scientific, Medical equipement».

**Patentansprüche**

1. Verfahren zur Datenübertragung zwischen einem Fahrzeug (3) und einem festen Streckenpunkt (6) mittels eines elektromagnetischen Feldes, wobei die zu übertragenden Daten als digitaler Bitstrom («0010110.. ») vorliegen;
   **dadurch gekennzeichnet, dass**
   der Bitstrom («0010110.. ») durch eine Modulation der Polarisation des elektromagnetischen Feldes übertragen wird.

2. Verfahren nach Anspruch 1;
   **dadurch gekennzeichnet, dass**
   für jeden der beiden möglichen Werte eines Bits («0», «1») aus dem Bitstrom («0010110.. ») in einer zur Übertragungsrichtung (d) orthogonalen Polarisationsebene (E) je eine Polarisationsrichtung ($\alpha$, V, H) zugeordnet ist.

3. Verfahren nach Anspruch 2;
   **dadurch gekennzeichnet, dass**
   das Vorhandensein eines Wertes eines Bits («0», «1») durch die Amplitude in der betreffenden Polarisationsrichtung ($\alpha$, V, H) dargestellt ist.

4. Verfahren nach einem der Ansprüche 1 bis 3;
   **dadurch gekennzeichnet, dass**
   ein Trägersignal ($I_T$) aus einer Quelle (12) zwei Phasenschiebern (10, 11) zugeführt wird, wobei je einem Phasenschieber (10, 11) die Information des Vorhandenseins von Bit 0 oder von Bit 1 zugeführt wird und dass die Polarisation durch Überlagerung der von den Phasenschiebern (10, 11)an eine Antenne abgegebenen Ströme ($I_1$, $I_2$) gebildet wird.

5. Verfahren nach Anspruch 4,
   **dadurch gekennzeichnet, dass**
   die Phasenschieber (10, 11) das zugeführte Trägersignal um je einen festen Phasenwinkel $\varphi_1$, $\varphi_2$ in der Phasenlage schieben.

6. Verfahren nach Anspruch 5,
   **dadurch gekennzeichnet, dass**
   den Phasenschiebern (10, 11) Phasenwinkel $\varphi_1$, $\varphi_2$ mit den Werten 0° und 180° zugeordnet sind.

7. Verfahren nach einem der Ansprüche 4 bis 6,
   **dadurch gekennzeichnet, dass**
   das Trägersignal ($I_T$) sinusförmig ist.

8. Verfahren nach einem der Ansprüche 4 bis 6,
   **dadurch gekennzeichnet, dass**
   dass Trägersignal ($I_T$) einer Direct Sequence Spread Spectrum Quelle (12) entstammt.

9. Verfahren nach einem der Ansprüche 4 bis 8;
   **dadurch gekennzeichnet, dass**
   die Quelle (12) temporär durch ein elektromagnetisches Feld mit Energie versorgt wird.

10. Verfahren nach Anspruch 1;
    **dadurch gekennzeichnet, dass**
    an der Empfangsstelle die Feldstärken des magnetischen Feldes vektoriell gemessen werden, um diese Werte als Feldstärkenbasis für eine nachfolgende Immunitätsprüfung von elektrischen Komponenten im Gleisbereich (6) oder am Fahrzeug (3) heranzuziehen.

11. Verfahren nach Anspruch 10;
    **dadurch gekennzeichnet, dass**
    die Werte mit einem Faktor (1.5x,2x, .., 20x) multipliziert und das resultierende Produkt als Feldstärkenbasis heranzuziehen.

**FIG 1**

**FIG 2**

3

L3

L1    L2

6

L1    L2

L3

**FIG 3**

$d_E$

L1    L2

16    b

L3

**FIG 4.1**

FIG 5

**FIG 4.2**

**FIG 6**

**Europäisches Patentamt**

# EUROPÄISCHER RECHERCHENBERICHT

Nummer der Anmeldung

EP 04 00 2614

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| E | US 2004/095907 A1 (AGEE BRIAN G ET AL) 20. Mai 2004 (2004-05-20) * Absätze [0018], [0143], [0237], [0381], [0382] * ----- | 1,10,11 | H04B5/02 |
| X | WO 01/18533 A (STOVE GEORGE COLIN) 15. März 2001 (2001-03-15) | 1 | |
| Y | * Seite 15, Zeile 30 - Seite 17, Zeile 2 * | 10,11 | |
| A | 2-9 * Seite 19, Zeilen 14-18 * * Seite 25, Zeilen 15-21 * * Seite 26, Zeilen 8-24 * * Seite 39, Zeile 16 - Seite 40, Zeile 9 * * Seite 41, Zeile 26 - Seite 43, Zeile 15 * ----- | | |
| X | US 6 339 611 B1 (AMES WILLIAM G ET AL) 15. Januar 2002 (2002-01-15) | 1 | |
| Y | * Spalte 3, Zeilen 5-18 * | 10,11 | |
| A | 2-9 * Spalte 3, Zeilen 49-58; Abbildungen 4a,4b,5 * ----- | | RECHERCHIERTE SACHGEBIETE (Int.Cl.7) H04B |
| X | EP 1 049 080 A (SEIKO INSTR INC) 2. November 2000 (2000-11-02) | 1,10,11 | |
| A | * Absätze [0016] - [0018], [0022], [0024], [0046], [0096], [0129], [0130], [0154], [0174] * ----- | 2-9 | |
| X | US 6 593 900 B1 (CRAVEN ROBERT P M ET AL) 15. Juli 2003 (2003-07-15) | 1,10,11 | |
| A | * Spalte 1, Zeilen 29-42 * * Spalte 5, Zeile 65 - Spalte 6, Zeile 8 * * Spalte 11, Zeilen 1-6 * * Spalte 11, Zeilen 48-52 * * Spalte 13, Zeilen 11-24 * ----- | 2-9 | |

-/--

Der vorliegende Recherchenbericht wurde für alle Patentansprüche erstellt

| Recherchenort | Abschlußdatum der Recherche | Prüfer |
|---|---|---|
| München | 6. September 2004 | Ernst, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.......................................................................................

& : Mitglied der gleichen Patentfamilie, übereinstimmendes Dokument

EPO FORM 1503 03.82 (P04C03)

**Europäisches Patentamt**

**EUROPÄISCHER RECHERCHENBERICHT**

Nummer der Anmeldung

EP 04 00 2614

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 3 636 508 A (OGILVY HARRY HEGGIE ET AL) 18. Januar 1972 (1972-01-18) | 1,10,11 | |
| A | * das ganze Dokument * | 2-9 | |
| | ----- | | |
| X | EP 0 699 573 A (GEC ALSTHOM TRANSPORT SA) 6. März 1996 (1996-03-06) | 1 | |
| A | * Spalte 1, Zeilen 17-53 *<br>* Spalte 2, Zeilen 6-10 *<br>* Spalte 4, Zeile 56 - Spalte 6, Zeile 19 * | 2-11 | |
| | ----- | | |

RECHERCHIERTE SACHGEBIETE (Int.Cl.7)

Der vorliegende Recherchenbericht wurde für alle Patentansprüche erstellt

| Recherchenort | Abschlußdatum der Recherche | Prüfer |
|---|---|---|
| München | 6. September 2004 | Ernst, C |

EPO FORM 1503 03.82 (P04C03)

**EP 1 562 304 A1**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-09-2004

| Im Recherchenbericht angeführtes Patentdokument | Datum der Veröffentlichung | Mitglied(er) der Patentfamilie | Datum der Veröffentlichung |
|---|---|---|---|
| US 2004095907 A1 | 20-05-2004 | KEINE | |
| WO 0118533 A | 15-03-2001 | AU 7023400 A<br>BR 0013842 A<br>CA 2382752 A1<br>EP 1210587 A1<br>WO 0118533 A1<br>NO 20021107 A | 10-04-2001<br>14-05-2002<br>15-03-2001<br>05-06-2002<br>15-03-2001<br>07-05-2002 |
| US 6339611 B1 | 15-01-2002 | AU 760132 B2<br>AU 2022400 A<br>BR 9915144 A<br>CA 2349170 A1<br>CN 1332913 T<br>EP 1129529 A1<br>JP 2002530005 T<br>WO 0028679 A1 | 08-05-2003<br>29-05-2000<br>02-01-2002<br>18-05-2000<br>23-01-2002<br>05-09-2001<br>10-09-2002<br>18-05-2000 |
| EP 1049080 A | 02-11-2000 | JP 2000123402 A<br>EP 1049080 A1<br>WO 0023989 A1 | 28-04-2000<br>02-11-2000<br>27-04-2000 |
| US 6593900 B1 | 15-07-2003 | KEINE | |
| US 3636508 A | 18-01-1972 | BE 746311 A1<br>CH 505515 A<br>DE 2008216 A1<br>FR 2035521 A5<br>GB 1242343 A<br>NL 7002255 A | 31-07-1970<br>31-03-1971<br>27-08-1970<br>18-12-1970<br>11-08-1971<br>25-08-1970 |
| EP 0699573 A | 06-03-1996 | FR 2724075 A1<br>AT 167837 T<br>AU 699130 B2<br>AU 3027095 A<br>BG 62867 B1<br>BG 99891 A<br>BR 9503850 A<br>CN 1127714 A ,B<br>CZ 9502216 A3<br>DE 69503200 D1<br>DE 69503200 T2<br>DK 699573 T3<br>EP 0699573 A1<br>ES 2119334 T3<br>FI 954027 A | 01-03-1996<br>15-07-1998<br>26-11-1998<br>14-03-1996<br>29-09-2000<br>30-04-1996<br>17-09-1996<br>31-07-1996<br>13-03-1996<br>06-08-1998<br>07-01-1999<br>09-11-1998<br>06-03-1996<br>01-10-1998<br>01-03-1996 |

EPO FORM P0461

Für nähere Einzelheiten zu diesem Anhang : siehe Amtsblatt des Europäischen Patentamts, Nr.12/82

**EP 1 562 304 A1**

## ANHANG ZUM EUROPÄISCHEN RECHERCHENBERICHT
## ÜBER DIE EUROPÄISCHE PATENTANMELDUNG NR.

EP 04 00 2614

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-09-2004

| Im Recherchenbericht angeführtes Patentdokument | Datum der Veröffentlichung | Mitglied(er) der Patentfamilie | Datum der Veröffentlichung |
|---|---|---|---|
| EP 0699573 A | | GR 3027692 T3 | 30-11-1998 |
| | | HU 73544 A2 | 28-08-1996 |
| | | NO 953399 A | 01-03-1996 |
| | | PL 310230 A1 | 04-03-1996 |
| | | RO 114431 B1 | 30-04-1999 |
| | | SK 108095 A3 | 03-04-1996 |
| | | ZA 9507274 A | 04-04-1996 |

EPO FORM P0461

Für nähere Einzelheiten zu diesem Anhang : siehe Amtsblatt des Europäischen Patentamts, Nr.12/82